# EUROPEAN PATENT SPECIFICATION

(11) **EP 3 344 477 B1**
(45) Date of publication and mention of the grant of the patent: **09.12.2020**
(21) Application number: 16782098.4
(22) Date of filing: 05.09.2016
(51) Int. Cl.: B60C 17/06, B60C 5/00

(54) **VEHICLE WHEEL ASSEMBLY COMPRISING A NON-PNEUMATIC TIRE**
FAHRZEUGRADANORDNUNG MIT EINEM LUFTLOSEN REIFEN
ENSEMBLE ROUE DE VÉHICULE COMPRENANT UN PNEU NON PNEUMATIQUE

(30) Priority: 03.09.2015 NL 2015393
(43) Date of publication of application: 11.07.2018
(73) Proprietor: Kesteloo, Kevin Sascha, 1764 HS Breezand (NL); Van Den Haak, Neil Johannes, 2377 DK Oude Wetering (NL)
(72) Inventor: Kesteloo, Kevin Sascha, 1764 HS Breezand (NL); Van Den Haak, Neil Johannes, 2377 DK Oude Wetering (NL)
(74) Representative: Hubregtse, Teunis
(86) International application number: PCT/NL2016/050615
(87) International publication number: WO 2017/039451

(56) References cited:
- WO-A1-2011/124736
- JP-A- H07 186 610
- US-A1- 2013 248 069
- US-H- H1 870

## Description

The invention relates to a vehicle wheel assembly, to a vehicle comprising such assembly and to method of making such assembly.

One of the major disadvantages of riding pneumatic tires is that the pressurized air inside may escape when the tire is punctured. This results in a so-called flat tire, which makes the tire essentially unsuitable for further riding. Only after treatments such as sealing or replacing the punctured tire, riding with the tire can be continued.

Many efforts have been performed to overcome this disadvantage. One of the most prominent solutions is the use of non-pneumatic tires. Such tires do not require the injection of a gas to gain a particular shape and resilience, but instead are made of a solid medium and do not have an air compartment for inflation. The properties of such tires, however, are still remote from those of pneumatic tires. For example, a person riding a vehicle with non-pneumatic tires often still experiences insufficient comfort as compared to pneumatic tires. In addition, the rolling resistance of many non-pneumatic tires is substantially higher than that of pneumatic tires. Another unfavourable property of many non-pneumatic tires is that during a standstill they slowly deform at the interface with the ground under their own weight and that of the vehicle in which they are mounted. As a result, the thread of the tire is not completely circular anymore, wich is noticeable as a recurring bump each time the deformed section of the thread contacts the ground during rotation of the tire. Although such deformation is usually temporary and likely disappears during riding with the tire, it is undesired and causes inconvenience.

The conventional pneumatic tire is in most cases an inner tire around which an outer tire is present that provides protection to the pneumatic tire. An outer tire may also provide surface adhesion (*i.e.* grip on the road) by means of a specific thread. In view of the abundancy of outer tires in the consumer market, the versatility in which they can be manufactured and the fact that wheel rims and outer tires have evolved as interrelated products, it may be beneficial to provide a non-pneumatic inner tire that can suitably be mounted on a conventional wheel rim together with a conventional outer tire.

Wheel assemblies comprising an inner tire and an outer tire wherein the inner tire is a non-pneumatic inner tire are also described in *e.g.* WO2011/124736 A1, US2013/248069 A1, JP H07186610 A and US H 1870 H.

It is therefore an objective of the present invention to provide a non-pneumatic tire that may serve as an alternative to pneumatic tires. It is in particular an object to provide a non-pneumatic inner tire that can be placed in a conventional assembly of an outer tire, an inner tire and a wheel rim.

It is therefore also an objective to provide an assembly of a non-pneumatic inner tire, an outer tire and a wheel rim that has improved properties with respect to known non-pneumatic assemblies. It is in particular an objective to overcome one of more of the abovementioned disadvantages.

It has now been found that a particular inner tire may be used to reach one or more of these goals.

Accordingly, the present invention relates to a vehicle wheel assembly, as defined in claim 1 and to a corresponding manufacturing method as defined in claim 8.

An assembly of the invention comprises a conventional composition of a wheel rim and an outer tire. The outer tire has two beads and the wheel rim has two opposed circular rim flanges. The outer tire is mounted onto the wheel rim by pulling the beads over the rim flanges so that the two beads are present around the rim bottom (*i.e.* around the receded part of the rim that is between the two rim flanges). In this way, the beads are secured at the flanges and the outer tire is strongly connected to the rim.

According to common practice, either a pneumatic inner tire or a non-pneumatic inner tire can be placed in an outer tire. A pneumatic inner tire can be filled with a gas to form an inflatable cushion of a particular shape. A non-pneumatic inner tire does not require the injection of a gas to gain a particular shape and the capability to act as a cushion. It derives its form and resilience from the presence of a solid medium instead of a major air compartment for inflation. This discrimination from pneumatic tires is often provided with the wording "massive tire". On a smaller scale, however, a massive tire may still comprise compartments of air, for example when the material of the inner tire is made of a porous material, such as a material with a closed or an open cell structure.

In a wheel assembly of the invention, a non-pneumatic inner tire is present that is enclosed by the outer tire. Typically, the inner tire is partly enclosed by the outer tire and partly by the wheel rim, in particular partly by the wheel rim bottom. In particular, for rim widths up to 22 mm (or 16-22 mm), the inner tire usually does not touch the rim bottom, but a small cavity remains between the rim bottom and the inner tire. Such placement of an inner tire in an outer tire often also occurs in conventional wheel assemblies.

E-TPU is different from thermoplastic polyurethane (TPU) in that it is expanded, *i.e.* it contains cells comprising gas (*e.g.* air) and as a result has a substantially lower density, e.g. lower than 600 kg m⁻³, lower than 450 kg m⁻³, lower than 350 kg m⁻³ or lower than 300 kg m⁻³.

E-TPU is typically a closed-cell particle foam, which is commercially available. The E-TPU particle foam itself exists as a collection of lightweight beads, while shaped products can be manufactured therefrom by processing them in a mold at elevated temperatures. The pre-foamed beads are then typically introduced into the mold by air pressure, so that they are pressed together in the mold. Thereafter, in the mold they are exposed to hot steam so that they bond together.

According to the invention, the density of the E-TPU in the inner tire is in the range of 200-400 kg m⁻³. These numbers refer to the E-TPU as such, *i.e.* without being compressed, corresponding to the relaxed state S2 as defined hereinbelow.

In the present invention, the E-TPU was for example obtained from BASF under the name "Infinergy"™ as beads. One of the specific types of this material that has been used in the invention is "Infinergy 11 25-130 U 000". According to procedures known in the art, the expanded beads were processed in a mould under steam pressure to create the inner tires of a particular shape and size. The inner tires that were used for the wheel assemblies of the invention had a density of approximately 250 kg m⁻³. The invention is however not limited to E-TPU inner tires of this density. As stated above, it may also be in the range of 200-400 kg m⁻³.

A pneumatic tire is usually only fully inflated after it has been enclosed by the outer tire and (optionally) the rim, otherwise it is essentially impossible to place it in the outer tire. A non-pneumatic inner tire, on the other hand, is often difficult to mount on a rim and in an outer tire, because it cannot be deflated and has a volume that cannot be changed easily. In addition, while good riding properties usually require a certain stiffness of the tire, this stiffness often hampers the (manual) mounting of the non-pneumatic tire into an outer tire and onto a wheel rim. Therefore, conventional non-pneumatic inner tires often don't have a good match with the outer tire and the wheel rim. This is disadvantageous for the riding properties and the wear of the outer tire.

It was surprisingly found, however, that an assembly of a non-pneumatic inner tire of E-TPU and an outer tire around a wheel rim can be formed wherein the inner tire is present in the outer tire while it is in a compressed state, wherein the assembly still maintains good riding properties and even can be assembled manually. This is in particular the case for wheel assemblies that can be used in bicycles and wheelchairs.

Before assembly, the (maximally achievable) volume of the outer tire (in particular the volume of the space defined by the outer tire and the rim) is smaller than that of the unassembled inner tire. Therefore, after assembly, the inner tire is in a compressed state, *i.e.* it is under tension. Surprisingly, it appeared possible to achieve this manually, *i.e.* with bare hands and optionally with the aid of tools that are not electrically powered. This is surprising because the material of a non-pneumatic tire has to be quite rigid to qualify for applications such as cyclism. The E-TPU indeed provides a wheel assembly with beneficial (riding) properties, but still allows a manual assembly that requires manual compression. This is important for consumers who want to use E-TPU tires of the invention in their conventional wheel assembly, because they (or their bicycle repair shop) can replace a (punctured) pneumatic inner tire by a new non-pneumatic E-TPU tire. In addition, such use of an E-TPU inner tire in a conventional wheel assembly does not require the purchase of new parts such as a new outer tire and/or a new rim.

In an assembly of the invention, the inner tire is compressed by the outer tire and the rim. This means that it is compressed relative to the volume it would occupy in the absence of the outer tire and the rim, *i.e.* when it is completely relaxated. This is for example the case when it lies on a surface while no other objects are exerting pressure anywhere on the tire. For the purpose of the invention, when the inner tire is in a compressed state *(i.e.* in the outer tire), then this state is defined as state S1. When the inner tire is not compressed, then it is in a relaxed state defined as state S2.

The degree of compression may be defined by the change in the dimensions of the tire when it is brought from S2 to S1, for example by a change in the thickness (*i.e.* diameter) of the tire, a change in a cross-sectional surface area of the tire or a change in the volume of the tire. Preferably, the degree of compression is based on the change that the cross-sectional surface area undergoes, which is the area that is perpendicular to the plane of the tire (*i.e.* perpendicular to the plane in which the tire would normally rotate when present in a wheel assembly in a vehicle). For the purpose of the invention, this cross-sectional surface area will be referred to as the cross-sectional surface area of the tire cylinder, and will abbreviated as SA. When the tire is in state S1, then this cross-sectional surface area is defined as SA_{S1}, and when the tire is in S2, then this cross-sectional surface area is defined as SA_{S2}. The degree of compression based on SA may then be defined as C_{SA} = SA_{S1} / SA_{S2}, which is a dimensionless number.

When SA_{S2} and SA_{S1} would both be circular, then the diameter (DM) of the tire could also be used to define the degree of compression, leading to the formula C_{DM} = DM_{S1} / DM_{S2}. However, in most wheel assemblies of the invention, the inner tire is not evenly compressed at its surface, leading to a cross-sectional surface area of the tire cylinder that is not circular in state S1. The degree of compression is then preferably based on the surface area itself and is thus preferably represented by C_{SA}. Before compression, however, the tire cylinder may indeed have a circular cross-sectional surface area, because it can be manufactured in that way. This allows a definition of the relaxed inner tire by means of DM_{S2}. This is useful for quickly identifying particular sizes of inner tires, since the sizes of commercially available tires are often primarily specified by their (outer) diameter.

According to the invention, C_{SA} is always 0.95 or less, 0.94 or less, 0.93 or less, 0.92 or less, 0.91 or less, 0.90 or less, 0.89 or less, 0.88 or less, 0.87 or less, 0.86 or less, 0.85 or less, 0.84 or less, 0.83 or less, 0.82 or less, 0.81 or less, 0.80 or less, 0.79 or less, 0.78 or less, 0.77 or less, 0.76 or less, 0.75 or less, 0.74 or less, 0.73 or less, 0.72 or less, 0.71 or less, 0.70 or less, 0.69 or less, 0.68 or less, 0.66 or less, 0.64 or less, 0.62 or less, 0.60 or less, 0.58 or less or 0.55 or less. These values correspond to other values for C_{DM}, which can be calculated. For example, a C_{SA} of 0.94 corresponds to a C_{DM} of 0.97; a C_{SA} of 0.90 corresponds to a C_{DM} of 0.95; and a C_{SA} of 0.81 corresponds to a C_{DM} of 0.90.

Usually, the C_{SA} is not smaller than 0.50. It may be 0.50 or more, 0.55 or more, 0.60 or more, 0.65 or more, 0.68 or more, 0.70 or more, 0.72 or more, 0.74 or more, 0.76 or more, 0.78 or more, 0.80 or more, 0.82 or more, 0.84 or more, 0.86 or more, 0.88 or more, 0.90 or more, 0.92 or more, 0.94 or more.

In principle, the degree of compression is independent of the absolute dimensions of the tire. Therefore, an inner tire may in principle have any SA_{S2} and DM_{S2}. Depending on the type of vehicle wherein an assembly of the invention is used, the dimensions of the inner and outer tire may differ. For the purpose of bicycles and wheelchairs, for example, the DM_{S2} of the inner tire is preferably in the range of 20-50 mm (corresponding to an SA_{S2} in the range of 314-1,963 mm²). It may also be in the range of 30-40 mm (corresponding to an SA_{S2} in the range of 707-1,257 mm²), or in the range of 33-37 mm (corresponding to an SA_{S2} in the range of 855-1,075 mm²).

DM_{S2} may also be 48 mm or lower, 46 mm or lower, 44 mm or lower, 42 mm or lower, 40 mm or lower, 39 mm or lower, 38 mm or lower, 37 mm or lower, 36 mm or lower, 35 mm or lower, 34 mm or lower, 33 mm or lower, 32 mm or lower, 31 mm or lower, 30 mm or lower, 29 mm or lower, 28 mm or lower, 27 mm or lower, 26 mm or lower, 25 mm or lower, 24 mm or lower, 23 mm or lower, 22 mm or lower or 21 mm or lower. DM_{S2} may be 20 mm or more, 21 mm or more, 22 mm or more, 23 mm or more, 24 mm or more, 25 mm or more, 26 mm or more, 27 mm or more, 28 mm or more, 29 mm or more, 30 mm or more, 31 mm or more, 32 mm or more, 33 mm or more, 34 mm or more, 35 mm or more, 36 mm or more, 37 mm or more, 38 mm or more, 39 mm or more, 40 mm or more, 42 mm or more, 44 mm or more, 46 mm or more or 48 mm or more.

SA_{S2} may be 1,800 mm² or less, 1,500 mm² or less, 1,300 mm² or less, 1,150 mm² or less, 1,000 mm² or less, 900 mm² or less, 800 mm² or less, 700 mm² or less, 600 mm² or less, 500 mm² or less or 400 mm² or less. SA_{S2} may be 350 mm² or more, 400 mm² or more, 500 mm² or more, 600 mm² or more, 700 mm² or more, 800 mm² or more, 900 mm² or more, 1,000 mm² or more, 1,150 mm² or more, 1,300 mm² or more, 1,500 mm² or more or 1,700 mm² or more.

It has to be noted that the limit for manually compressing an inner tire that is made of E-TPU with a particular compressibility, is in fact dependent on 1) the diameter of the inner tire and 2) the degree of compression C_{SA} that is to be achieved. A higher diameter only can be used when C_{SA} is closer to unity, and a lower diameter can also be used when C_{SA} is more remote from unity.

In an embodiment, a wheel assembly was made from an inner tire with a circular cross-section having a DM_{S2} of 37 mm (corresponding to an SA_{S2} of 1075 mm²). This inner tire was placed in a particular outer tire with a size that required compression of the inner tire. The dimensions of the inside of an outer tire are usually not specified when purchasing a tire; outer tires are often sold under a name that carries only the width of the tire in it. In this particular case, the width was 40 mm. When the resulting assembly of the invention was analyzed, SA_{S1} was measured to be 850 mm². Accordingly, the C_{SA} in this assembly is 0.79.

In a similar embodiment, an inner tire with a circular cross-section having a DM_{S2} of 35 mm (corresponding to an SA_{S2} of 962 mm²) was placed in the same outer tire of 40 mm width. The resulting wheel assembly also had an SA_{S1} of 850 mm², from which a C_{SA} of 0.88 was calculated.

It was then extrapolated that for this outer tire, the lower limit of DM_{S2} would be around 33 mm (corresponding to an SA_{S2} of 855 mm²), since in this case C_{SA} would be just below 1.

The assembly wherein the C_{SA} was 0.79 could be assembled manually, but it was tough. Thus, for an outer tire of these dimensions, the limit for the diameter DM_{S2} of an inner tire is around 37 mm. This is of course as far is manual assembly is concerned, because with the aid of additional machinery also larger inner tires can be compressed.

An assembly was also made for an outer tire having a width of 32 mm. The SA_{S1} in this assembly was measured to be 600 mm². It appeared that an inner tire having a DM_{S2} of 32 mm (corresponding to an SA_{S2} of 804 mm²) could nicely be compressed manually into the outer tire, yielding a C_{SA} of 0.75. This demonstrates that for thinner tires with a smaller diameter of the tire cylinder, a higher (manual) compression can be reached, *i.e.* the value of C_{SA} is lower. This is understandable, because the total force that is required for a certain compression ratio is higher when a tire contains more material.

As mentioned above, bicycles and wheelchairs are vehicles wherein a wheel assembly of the invention can be applied. For this application, DM_{S2} of the inner tire is preferably in the range of 20-50 mm. Wheel assemblies of the invention may however find wider application, for example in electric bicycles *(i.e.* bicycles with an integrated electric motor for propulsion, commonly known as e-bikes), mobility scooters, scooters, motorcycles, cars, trucks, wheelbarrows, trolleys, and hand trucks. In these applications, the DM_{S2} of the inner tire is usually larger than in bicycles. It is for example in the range of 40-250 mm (SA_{S2} is then in the range of 1,257-49,087 mm²), 50-200 mm (SA_{S2} is then in the range of 1,964-31,416 mm²), 75-150 mm (SA_{S2} is then in the range of 4,418-17,671 mm²) or in the range of 100-250 mm (SA_{S2} is then in the range of 7,854-49,087 mm²).

The cross-sectional surface of the tire cylinder of an inner tire of the invention is not necessarily circular in state S2. It may also have an oval or elliptic shape, or any other shape that is suitable in a particular outer tire. An oval or elliptic shape may in particular be oriented such that its longest diameter is a line in the plane of the tire *(i.e.* the plane in which the tire normally rotates). In this way, the pressure exerted by the outer tire may vary around the periphery of the cross-sectional surface in such a way that the highest pressure is exerted along the line between the thread of the tire and the rim (bottom) facing the thread. Due to this shape, the inner tire has a better fit between the two beads that are secured at the flanges. In addition, there is more force pushing the inner tire towards the rim bottom. These effects result in a higher filling percentage of the space defined by the outer tire and the wheel rim, which may improve the properties of the wheel assembly, in particular the rolling resistance and the comfort.

Beside the diameter of the tire cylinder (which is perpendicular to the plane in which the tire would normally rotate), a tire in an assembly of the invention also has a diameter in the plane in which the tire normally rotates. For the purpose of the invention, this diameter will be termed the main diameter of the tire. Common main diameters of bicycle outer tires are for example 12 inch, 16 inch, 20 inch, 24 inch, 26 inch or 28 inch. The main diameter of the tire may either be the diameter of the circle enclosed by the tire ("main inner diameter"), or the diameter of the outer periphery of the tire ("main outer diameter", corresponding with the largest dimension of the tire).

The main outer diameter of the inner tire in state S1 will normally equal the main outer diameter of the outer tire minus twice the thickness of the thread of the outer tire.

The main inner diameter of the inner tire in state S2 may be within a certain range when it is to be mounted on a rim with a particular size. Different diameters can be accommodated for in the outer tire since the inner tire may adapt its size and form to that of the outer tire in S1. An inner tire in state S2 may for example have a main inner diameter that is smaller than the diameter of the rim flanges. This means that the inner tire needs to be stretched in order to pull it over the rim flanges, as is usually also the case when a conventional outer tire is mounted on the wheel rim. The main inner diameter is usually 90% or more of the diameter of the rim flanges. It may also be 93% or more, 95% or more, 97% or more, or 99% or more. A too small main inner diameter may hinder a good positioning of the inner tire in the outer tire, because it is drawn too much to the rim bottom.

The main inner diameter of the inner tire in state S2 may also be larger than the diameter of the rim flanges, as is often the case with a conventional inflated pneumatic inner tire. The main inner diameter may be 101% or more, 103% or more, 105% or more, 107% or more, 110% or more or 113% or more of the diameter of the rim flanges. It is usually 115% or less of the diameter of the rim flanges. It may also be 110% or less, 107% or less, 105% or less, 103% or less, 101% or less, 98% or less or 95% or less of the diameter of the rim flanges. Usually, it is in the range of 92-118%, or in the range of 94-110% of the diameter of the rim flanges. A too large main inner diameter may hinder a good positioning of the inner tire in the outer tire, since the inner tire may wrinkle in the outer tire, leading to an irregular and/or distorted assembly of inner tire and outer tire.

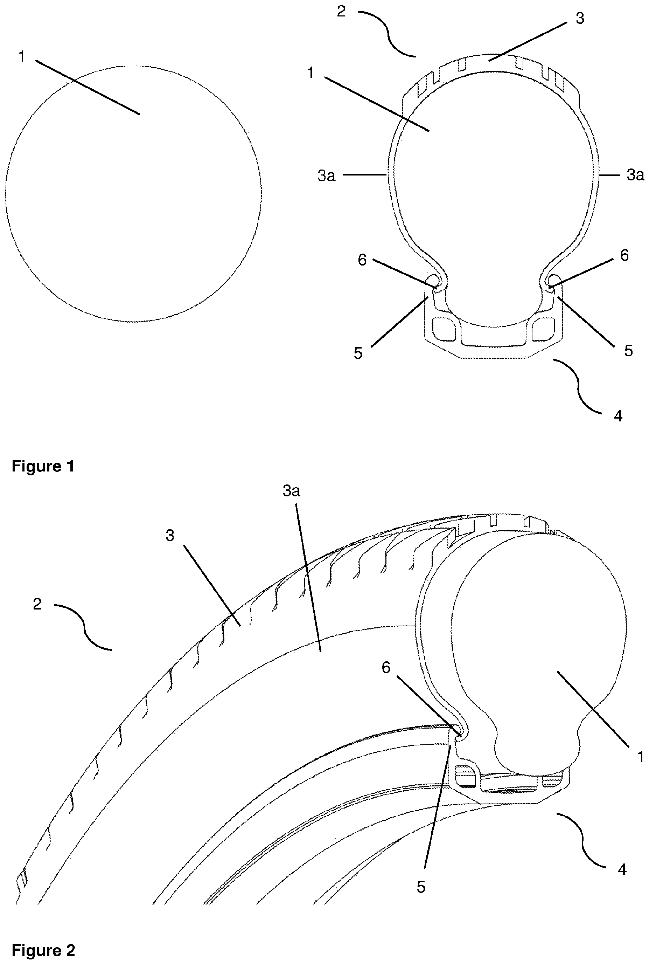

As already indicated above, the inner tire in an assembly of the invention is possibly not evenly compressed around the periphery of the cross-sectional surface area of the tire cylinder, because the surface area in state S1 often has a different shape than that in state S2. A deviation from the original shape in particular occurs at the side of the wheel rim, as compared to the side of the thread. The two beads of the outer tire are squeezed together by the rim flanges, so that the cross-section of the compressed inner tire reaches a form that resembles the shape of a pear. Its main part is round or oval (at the thread and the lateral faces), which has a small extension on one side (at the rim). Figure 1 displays how the cross-sectional surface area SA of the inner tire may change when the tire goes from state S1 to state S2. The left drawing in Figure 1 is a cross-sectional view of the tire cylinder of the inner tire (1), representing the inner tire in state S2. The right drawing in Figure 1 is also a cross-sectional view of the tire cylinder of the inner tire, but in this case the inner tire is present in an assembly (2) of the invention, representing the inner tire in state S1. The assembly (2) comprises an outer tire (3) and a wheel rim (4), the wheel rim (4) comprising two rim flanges (5). The changed shape of the cross-sectional surface of the tire cylinder due to the compression can clearly be seen in Figure 1, since it is not circular anymore when the inner tire is present in an assembly (2) of the invention. Figure 2 represents a three-dimensional representation of an assembly (2) of the invention, showing the inner tire (1), the outer tire (3), and the wheel rim (4) comprising two the rim flanges (5).

The rim flanges may have a separation in the range of 14-30 mm. It may also be in the range of 16-18 mm, in the range of 18-21 mm or in the range of 22-26 mm.

The wheel assemblies according to the invention were investigated by measuring their rolling resistance and driving comfort. The values were compared with those obtained when the same wheel assembly was provided with either a pneumatic tire or a conventional non-pneumatic tire instead of the E-TPU tire.

The pneumatic tire was tested when inflated to a pressure of 2.3 bar. This pressure is a bit below the optimal pressure for many pneumatic tires, but since the average cyclist often appears to be slack in maintaining his tires at the optimal pressure, 2.3 bars appears to be a realistic value for comparative tests.

The comparative non-pneumatic inner tire was made of polyurethane (PU).

The outer tire was a standard tire of an average quality, being an abundant tire in the Dutch bicycle market.

Measuring of the rolling resistance was performed by making use of the pendulum rolling resistance test as described in "The world's most fuel efficient vehicle" (ISBN-10:3728131342).

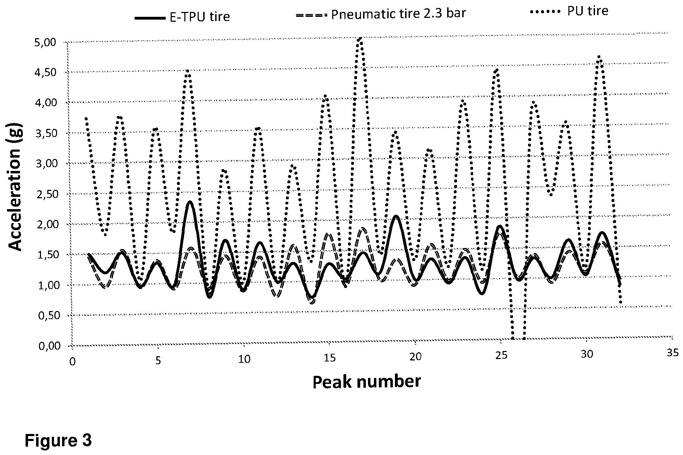

The driving comfort was determined by measuring the vertical acceleration and deceleration in time when a bicycle comprising a wheel assembly of the invention rides over a certain trajectory. Since the trajectory is not flat, the bicycle experiences bumps during riding, which bumps are registered by an accelerometer mounted on the bicycle. The height of the hills and the depth of the valleys of the obtained graph are indicative of the degree of vibration of the bicycle. A high degree of vibration is expressed by high hills and low valleys. This is experienced by a cyclist as less comfortable than a low degree of vibration. During the particular ride, a set of 1060 data points was initially obtained. For aesthetic reasons and easy viewing, the representative 32 highest and lowest amplitudes were selected and plotted as a graph (Figure 3).

It appeared that the comfort of an assembly of the invention is similar to that of a pneumatic tire inflated to a pressure of 2.3 bar. This is demonstrated in Figure 3, wherein the graphs of the E-TPU tire and the pneumatic tire have similar amplitudes. Further, the comfort provided by a E-TPU inner tire appeared to much higher than that provided by a conventional non-pneumatic PU tire, which is demonstrated by the much larger amplitudes in Figure 3 in case of the non-pneumatic PU tire as compared to those of the E-TPU tire.

In addition to the visualization in Figure 3, the comfort of the three tires was also compared by calculating the average vertical acceleration of each tire by averaging the 1060 data points for each tire. This yielded an acceleration of 1.27 g for the E-TPU tire of the invention, 1.26 g for the 2.3 bar pneumatic tire, and 1.99 g for the non-pneumatic PU tire. This is line with the comfort of the three tires as displayed in Figure 3 and the discussion thereof provided above.

It was further found that the rolling resistance coefficient of a wheel assembly of the invention was similar to that of an assembly comprising a pneumatic tire inflated to a pressure of 2.3 bar. In both cases a rolling resistance coefficient of 0.010 was found (which value was based on a measured 27.5 seconds of swinging of the pendulum).

Thus, a wheel assembly of the invention has a comfort and rolling resistance that are similar to those of a conventional pneumatic tire.The difference between both assemblies, however, is that the one of the invention cannot run flat.

Having performed the quantitative tests on the comfort and the rolling resistance, it was recognized that not all properties of a wheel assembly can be caught by objective measurements. Riding a bicycle is a total-experience of the driver that is governed by many factors. To investigate whether an assembly of the invention in a bicycle makes a ride on the bicycle more pleasant or enjoyable, a test was performed with a panel of 33 bicycle drivers. These drivers were asked to follow a particular trajectory on (1) a bicycle having wheel assemblies of the invention and on (2) a comparative bicycle having pneumatic tires.

Surprisingly, a bicycle having wheel assemblies of the invention appeared to provide a riding experience that is similar to or only slightly poorer than that provided by a bicycle with conventional pneumatic tires. In particular, the comfort and rolling resistance were experienced as approximately the same for both bicycles. This is surprising because it is known from conventional massive inner tires that an improvement of the rolling resistance always goes at the expense of the comfort, and *vice versa.* Thus, an assembly of the invention is capable of bringing both properties almost up to the level of a conventional pneumatic tire. This makes that the assemblies of the invention perform similar to conventional pneumatic tires.

The difference between both types of wheel assemblies, however, is that an assembly of the invention cannot run flat. Accordingly, replacement of conventional pneumatic tires with massive tires without losing too much of the beneficial properties of conventional pneumatic tires has now become possible.

Moreover, when riding on an assembly of the invention is compared to riding on a conventional wheel assembly with a pneumatic tire of 2.3 bars, the wear of an outer tire in an assembly of the invention surprisingly appears to occur much slower than that of a conventional wheel assembly with a pneumatic tire of 2.3 bars, because the outer tire with the pneumatic tire undergoes much more indentations than the outer tire with the E-TPU - the indentations in both cases being the result of the relief present at the surface on which the tire is riding. Especially maximal indentations *(i.e.* indentation wherein the rim flanges directly bump onto an obstacle and get damaged), can be prevented with an E-TPU tire.

For this reason, the lateral faces of the outer tire (*i.e.* the parts of the outer tire between the thread and the beads; this area is more or less perpendicular to the thread of the tire) can be made of a material of less stringent requirements. In principle, the main function of an outer tire in an assembly of the invention is that is contains the desired thread and is capable of tightly enclosing the inner tire and has the strength to compress the inner tire. Thus, it can be made of less material and/or of a material that does not have to withstand a high number of (maximal) indentations. In addition, since the inner tire cannot run flat because it is non-pneumatic, the outer tire does not need to be puncture proof. The tire may for example be thinner, especially at the lateral faces, due to which it will absorb less energy. This allows the manufacture of vehicle wheel assemblies that have a lower rolling resistance. At at least part of the lateral faces of the outer tire in an assembly of the invention, the thickness is for example 1.5 mm or less, 1.2 mm or less, 1.0 mm or less, 0.9 mm or less, 0.8 mm or less, 0.7 mm or less, 0.65 mm or less, 0.55 mm or less, 0.50 mm or less, 0.45 mm or less, 0.4 mm or less, 0.35 mm or less or 0.3 mm or less.

Another unexpected advantage of an assembly of the invention is that the inner and outer tire do not slip or roll on the wheel rim when using the wheel assembly. The compressed inner tire exerts a larger outward force on the outer tire than conventional non-pneumatic inner tires do, so that the friction of the outer tire with the wheel rim is increased. In addition, the inner tire usually also exerts pressure on the rim bottom, which also increases the friction with the wheel rim.

Yet another surprising advantage of an assembly of the invention is that during a standstill, it does not noticeably deform at the interface with the ground under its own weight and that of the vehicle in which it is mounted. In conventional non-pneumatic tires, a recurring bump occurs each time the deformed section of the thread contacts the ground, but with an assembly of the invention, no such irregularities were observed or noticed. This is an unexpected advantage and contributes to the driving comfort of an assembly of the invention.

An inner tire of the invention is manufactured according to known methods. The E-TPU is industrially available as small beads, from which the inner tires were prepared by exposing the beads in a mould to steam pressure (*e.g*. in the range of 1.6-3.0 bar or 1.6-2.2 bar).

An assembly of the invention can for example be prepared by pulling one of the two beads of the outer tire over one of the rim flanges of the wheel rim, and then pulling the inner tire over the rim flange whilst pressing the inner tire into the outer tire. Once it is enclosed by the outer tire over its entire periphery, the second bead of the outer tire can be pulled of the rim flange to form the wheel assembly of the invention. Alternatively, the inner tire can be placed in the outer tire, and this composition may then be mounted onto a wheel rim by pulling the first of the two beads of the outer tire over one of the rim flanges of the wheel rim, and then pulling the second bead of the outer tire over the rim flange.

Accordingly, the present invention further relates to a method according to claim 8 for preparing a vehicle wheel assembly of claim 1.

In the above method, the step of pulling one of the beads over one of the rim flanges may be performed before or after the step of pressing the outer tire into the inner tire. The last step is always the pulling of the second bead.

As stated above, it may in some cases be difficult to manually mount an inner tire in an outer tire on a wheel rim to prepare an assembly of the invention. This is in particular the case when the necessary degree of compression of the inner tire requires too much force for doing this manually. This problem may be solved by temporarily exposing the inner tire to a decreased pressure (*i.e.* a pressure of less than one atmosphere). In this way, a pressure difference between the closed cells and the surroundings will be generated because the E-TPU is not capable of expanding so much that the pressure in the closed cells keep up with that of the surrounding. The closed cells however equibrate with the surrounding of the inner tire, *i.e.* the pressure in the cells levels with that in the surrounding. This occurs by diffusion of the excess air from the closed cells through the walls of the closed cells into the surrounding. When the pressure is increased again (typically to atmospheric pressure), the closed cells collapse because the E-TPU is not capable of withstanding the increased pressure due its resilience. As a result, the inner tire occupies a reduced volume and becomes better manageable. In this state, the tire is placed into an outer tire and around a wheel rim, therewith preferably also securing both beads behind the rim flanges. This method is easier to carry out than in the case wherein the inner tire in its initial, relaxed, state. During prolonged exposure of the inner tire to the increased pressure (in particular atmospheric pressure), the pressure in the closed cells levels with that in the surrounding. Finally, the inner tire is present in the outer tire in a compressed fashion, which is the same situation as would occur after normal (for example manual) compression from state S2 to state S1. This way of assembling the wheel can be used to aid the manual assembly, or it can be used when it is not possible to assemble only by manual methods. The latter situation may occur when the intended assembly has more extreme values of C_{SA} (*e.g*. of 0.75 or lower) and/or when there is a large cross-sectional surface area of the tire cylinder (*e.g*. 40 mm or more).

Therefore, in an embodiment of the method for preparing a vehicle wheel assembly according to the invention, the inner tire, before being pressed into the outer tire, is
- exposed to a pressure of less than 1 bar; and then
- exposed to atmospheric pressure.

The pressure of less than one bar is for example 0.7 bar or less, 0.5 bar or less, 0.3 bar or less, 0.1 bar or less, 0.5 bar or less or 0.01 bar or less. Preferably, this pressure is gradually applied so as to ensure that the closed cells do not get damaged. The exposure to the pressure of less than 1 bar may be during 10 minutes or more, 30 minutes or more, 1 hour or more, 2 hours or more, 5 hours or more, 12 hours or more, or 24 hours or more.

A person skilled in the art will know how to gradually apply the decreased pressure without damaging the material and will know the duration of applying this pressure, or is able to find these out without undue experimentation and without exerting inventive effort.

Another method to make the compression of the inner tire more convenient is to make use of a compression mold wherein the inner tire is pre-compressed before placing it in assembly of the invention. In such mold, the shape and size of the inner tire are temporarily modified so that it can more easily be placed in an outer tire of an assembly of the invention. Due to the temporary nature of the modification, the pre-compressed tire is to be pressed into the outer tire directly after releasing it from the compression mold.

As described thus far, the inner tire and the outer tire in an assembly of the invention do not adhere to each other. In principle, when the assembly is disassembled, the inner and outer tire may ten also easily be separated. In a particular embodiment, however, the inner tire and the outer tire are structurally connected to each other. This has the effect that no friction occurs between the inner tire and the outer tire when riding with the wheel assembly. In addition, the inner tire an the outer tire cannot (temporarily) separate from each other during use. For example, the lateral faces on the outer tire do not loose contact with those of the inner tire, which results in less fatigue and damage of the outer tire, and reduces the rolling resistance of the wheel assembly. In addition, less damage occurs to the inner tire due to abrasion, because its connection to the outer tire does not allow relative movement of both tires so that abrasive forces do not get a chance.

The connection between the two tires can be realized by fusing them together, for example by heating a composite of both tires to a temperature at which both materials melt. In such cases the outer tire may be made of PU. It is particularly beneficial to use an outer tire of TPU because of the chemical and physical compatibility with the E-TPU of the inner tire. Another method for connecting the two tires relies on the use of a glue.

### EXAMPLES

### 1. Measuring the rolling resistance and riding comfort

### 1.1. Materials and Methods

The wheel assemblies according to the invention were investigated by measuring their rolling resistance and driving comfort. The values were compared with those obtained when the same wheel assembly was provided with either a conventional pneumatic tire or a conventional non-pneumatic tire instead of the E-TPU tire.

The comparative pneumatic tire was tested when inflated to a pressure of 2.3 bar and the comparative non-pneumatic inner tire was made of polyurethane (PU). The outer tire was a standard 28" tire of a good quality (Schwalbe Energizer Plus) with a width of 40 mm (outer diameter), being an abundant tire in the Dutch bicycle market.

The E-TPU of the inner tire was obtained from BASF under the name "Infinergy"™. An inner tire of this material was obtained by processing globular beads of expanded TPU in a mould under steam pressure. The E-TPU had a density of approximately 250 kg m⁻³.

In the assembly of the invention, an E-TPU inner tire with a circular cross-section of DM_{S2} of 37 mm (corresponding to an SA_{S2} of 1075 mm²) was placed in the outer tire of 40 mm width (outer diameter). The E-TPU inner tire was present in the outer tire under pressure (*i.e.* it was in a compressed state), such that the wheel assembly had an SA_{S1} of 850 mm². Accordingly, the degree of compression C_{SA} in the assembly was 0.79.

Measuring of the rolling resistance was performed by making use of the pendulum rolling resistance test as described in "The world's most fuel efficient vehicle" (ISBN-10:3728131342).

The driving comfort of a bicycle comprising a wheel assembly of the invention was determined by measuring the vertical acceleration and deceleration of the bicycle in time when it rides over a certain trajectory. Therefore, an accelerometer was mounted on the bicycle. The acceleration values are indicative of the degree of vibration of the bicycle, and thus also of the comfort.

### 1.2. Results

### 1.2.1. Rolling resistance

It was found that the rolling resistance coefficient of a wheel assembly of the invention was similar to that of an assembly comprising a pneumatic tire inflated to a pressure of 2.3 bar. In both cases a rolling resistance coefficient of 0.010 was found (which value was based on a measured 27.5 seconds of swinging of the pendulum).

### 1.2.2. Comfort

During the particular ride, a set of 1060 data points was initially obtained. For aesthetic reasons and easy viewing, the representative 32 highest and lowest amplitudes were selected and plotted as a graph (Figure 3). It appeared that the comfort of an assembly of the invention is similar to that of a pneumatic tire inflated to a pressure of 2.3 bar. This is demonstrated in Figure 3, wherein the graphs of the E-TPU tire and the pneumatic tire have similar amplitudes. Further, the comfort provided by a E-TPU inner tire appeared to much higher than that provided by a conventional non-pneumatic PU tire, which is demonstrated by the much larger amplitudes in Figure 3 in case of the non-pneumatic PU tire as compared to those of the E-TPU tire.

In addition to the visualization in Figure 3, the degree of comfort of the three tires was also compared by calculating the average vertical acceleration of each tire by averaging the 1060 data points for each tire. This yielded an acceleration of 1.27 g for the E-TPU tire of the invention, an acceleration of 1.26 g for the 2.3 bar pneumatic tire, and an acceleration of 1.99 g for the non-pneumatic PU tire. This is line with the comfort measurements of the three tires as displayed in Figure 3.

### 2. Panel test

A bicycle having in two of its wheels an assembly of the invention was used by a panel composed of 33 Dutch experienced bicycle riders. As a comparative, they also used a bicycle with conventional pneumatic wheel assemblies, inflated to a pressure of 2.3 bar. The two bicyles used in this panel test were essentially identical, except for the wheel assemblies. The pressure of 2.3 bar was chosen because this pressure gave vertical accelerations in the comfort measurements that were similar to those of the particular assembly of the invention (see section 1.2.2. of the Examples). In other words, with this pressure, a hardness of the tire is reached that is comparable to the hardness of the E-TPU containing tire.

The assemblies of the invention used in the bicycle were the same as those described under section 1.1. of the Examples. The bicycle riders were intercepted at a resting place on a busy Dutch bicycle route and asked to participate in the panel test.

The test was performed in a so-called double blind manner, *i.e.* neither the panel members nor the team of investigators responsible for the panel test knew which of the two bicycles contained the pneumatic inner tire or the E-TPU inner tire. In order to keep the bicycles visually identical, the bicycle with the assemblies of the invention was equipped with a fake air valve on each rim.

The form on which the panel members had to note their experiences contained 10 questions. Answering these questions required choosing the appropriate point of a Likert scale. The scale contained five choices: 1. Poor; 2. Fair; 3. Good; 4. Very good; 5. Excellent. The questions were the following:
1. How was your riding experience in general?
2. How was you riding experience on the flat (red) asphalt?
3. How was you riding experience on the brick road?
4. Wat is your opinion on the rolling resistance in general?
5. Wat is your opinion on the comfort on the brick road?
6. Wat is your opinion on the comfort during driving onto the curb?
7. Wat is your opinion on the comfort during driving off the curb?
8. Wat is your opinion on the driving behavior of the bicycle in the turns?
9. Wat is your opinion on the braking of the bicycle?
10. Wat is your opinion on the tension of the tires?

At the end, the form contained a remark section, wherein the panel members could put additional remarks on their own discretion.

The answers of all 33 respondents on the questions are summarized in Table 1. Bicycle 1 has wheel assemblies of the invention and bicycle 2 has the conventional pneumatic wheel assemblies.

**Table 1. Summary of the results of the panel test.**

| | **Bicycle** | **Poor** | **Fair** | **Good** | **Very Good** | **Excellent** |
|---|---|---|---|---|---|---|
| **Q.1** | 1 (E-TPU) | 0 | 0 | 2 | 28 | 3 |
| | 2 (pneum) | 0 | 0 | 3 | 24 | 6 |
| **Q. 2** | 1 (E-TPU) | 0 | 0 | 0 | 30 | 3 |
| | 2 (pneum) | 0 | 0 | 3 | 25 | 5 |
| **Q. 3** | 1 (E-TPU) | 0 | 0 | 0 | 30 | 3 |
| | 2 (pneum) | 0 | 0 | 0 | 26 | 7 |
| **Q. 4** | 1 (E-TPU) | 0 | 0 | 0 | 30 | 3 |
| | 2 (pneum) | 0 | 0 | 3 | 21 | 9 |
| **Q. 5** | 1 (E-TPU) | 0 | 0 | 0 | 30 | 3 |
| | 2 (pneum) | 0 | 0 | 4 | 27 | 2 |
| **Q. 6** | 1 (E-TPU) | 0 | 0 | 0 | 29 | 4 |
| | 2 (pneum) | 0 | 0 | 0 | 27 | 6 |
| **Q.7** | 1 (E-TPU) | 0 | 0 | 2 | 31 | 0 |
| | 2 (pneum) | 0 | 0 | 0 | 29 | 4 |
| **Q. 8** | 1 (E-TPU) | 0 | 0 | 0 | 30 | 3 |
| | 2 (pneum) | 0 | 0 | 2 | 21 | 10 |
| **Q. 9** | 1 (E-TPU) | 0 | 0 | 0 | 27 | 6 |
| | 2 (pneum) | 0 | 0 | 3 | 21 | 9 |
| **Q. 10** | 1 (E-TPU) | 0 | 0 | 0 | 24 | 9 |
| | 2 (pneum) | 0 | 0 | 3 | 18 | 12 |

Questions 1-3 are directed to the riding experience, which is a catch-all of all factors that contribute to how a ride on the particular bicycle is perceived. In all three questions, the bicycle with wheel assemblies of the invention gives the same or a slightly poorer experience to the respondent than the comparative bicycle with pneumatic tires.

In question 4, the respondent is asked to give his opinion on the rolling resistance. The answers indicate that the perception of rolling resistance is substantially the same for both bicycles.

Questions 5-7 are directed to the comfort. A bicycle having assemblies of the invention was found to have a slightly better comfort on the brick road than a bicycle having pneumatic tires. On the other hand, ascending and descending the curbs is experienced as a bit more comfortable with a bicycle having pneumatic tires.

In questions 8 and 9, the respondent is asked to give his opinion on the bicycle's behavior in the turns and on the braking of the bicycles, respectively. The bicycle with assemblies of the invention and the comparative bicycle having pneumatic tires appear to have a similar performance in each of the two areas.

It is noted that the answers on question 10 confirm that the average bicycle rider is indeed used to an air pressure in the tire that is rather low (such as 2.3 bar). This is because 18 of the 33 members rate the pressure as "very good", while 12 of them even rate it as "excellent". No respondent awarded the relatively soft tension of the pneumatic tire with "poor" or "fair".

In conclusion, questions 1-9 reveal that a bicycle with assemblies of the invention has a similar or slightly poorer performance than the comparative bicycle with pneumatic tires.

On some forms, the remark in the remark section contained the statement that there was in fact no difference noticed between both bicycles. This message was in much more cases also given orally by the respondents after completing the rides on both bicycles.

The total score of the two bicycles on all ten questions can be caught in one value by calculating the weighed sum of the choices on the Likart scale. These results are displayed in Table 2.

**Table 2. Weighed sum of the results test and total score for both bicycles.**

| | **Poor** | **Fair** | **Good** | **Very Good** | **Excellent** | **Total score** |
|---|---|---|---|---|---|---|
| 1 (E-TPU) | 1x0 = 0 | 2x0 = 0 | 3x4 = 12 | 4x298 = 1156 | 5x37 = 185 | **1353** |
| 2 (pneum.) | 1x0 = 0 | 2x0 = 0 | 3x21 = 63 | 4x239 = 956 | 5x70 = 350 | **1369** |

Both scores differ by 1.3%, indicating that both bicycles have a similar performance. It is noted that the conventional bicycle has a larger spread in the choices, since it has 21 times been labeled as "good" and 70 times as "excellent", whereas these values are 4 and 37, respectively, for the bicycle with wheel assemblies of the invention.

## Claims

1. Vehicle wheel assembly (2), comprising
- a wheel rim (4) having two opposed circular rim flanges (5);
- an outer tire (3) having two beads (6) secured at the circular rim flanges (5);
- a non-pneumatic inner tire (1), **characterized in that** said inner tire comprises expanded thermoplastic polyurethane (E-TPU), which inner tire (1) is enclosed by the outer tire (3) and the wheel rim (4); and **in that**
- the inner tire (1) in the assembly (2) is in a compressed state S1, which state is compressed as compared to a relaxed state S2 when the inner tire (1) is not enclosed by the outer tire (3), the compression being such that the cross-sectional surface area SA of the inner tire (1), which area is perpendicular to the plane of the tire, is smaller in state S1 than in state S2;
- the inner tire (1), when in the relaxed state S2, has a density in the range of 200-400 kg m⁻³;
- the SA in state S1 is 0.95 times or less the SA in state S2.

2. Vehicle wheel assembly (2) according to claim 1, wherein the SA in state S1 is 0.90 times or less.

3. Vehicle wheel assembly (2) according to claim 1 or 2, wherein the diameter DM_{S2} of the inner tire (1) in state S2 is in the range of 30-40 mm, or wherein the surface area SA_{S2} of the inner tire (1) in state S2 is in the range of 700-1250 mm².

4. Vehicle wheel assembly (2) according to any of claims 1-3, wherein the distance between the rim flanges (5) is in the range of 16-26 mm.

5. Vehicle wheel assembly (2) according to any of claims 1-4, wherein the inner tire (1) and the outer tire (3) are connected to each other.

6. Vehicle wheel assembly (2) according to any of claims 1-5, wherein at at least part of the lateral faces (3a) of the outer tire (3) in the assembly (2), the thickness is 0.75 mm or less, in particular 0.50 mm or less.

7. Vehicle comprising a vehicle wheel assembly (2) according to any of the preceding claims, wherein the vehicle is selected from the group of bicycles, wheelchairs, electric bicycles, mobility scooters, scooters, motorcycles, cars, trucks, wheelbarrows, trolleys and hand trucks.

8. Method for preparing a vehicle wheel assembly (2) according to any of claims 1-7, comprising
- providing 1) a wheel rim (4) having two opposed circular rim flanges (5); 2) an outer tire (3) having beads (6) capable of being secured at the circular rim flanges (5) of the wheel rim; 3) a non-pneumatic inner tire (1) comprising expanded thermoplastic polyurethane (E-TPU); then
- pulling one of the beads (6) of the outer tire (3) over one of the rim flanges (5) of the wheel rim (4);
- pressing the inner tire (1) into the outer tire (3);
- finally pulling the second bead (6) of the outer tire (3) over the rim flange (5) to form the wheel assembly (2) of the invention.

9. Method according to claim 8, wherein the inner tire (1), before being pressed into the outer tire (3), is pre-compressed in a compression mold.

10. Method according to claim 8, wherein the inner tire (1), before being pressed into the outer tire (3), is made softer by
- exposing it so a pressure of less than 1 bar; followed by
- exposing it to atmospheric pressure.

## Patentansprüche

1. Fahrzeugradanordnung (2), umfassend
- eine Radfelge (4) mit zwei gegenüberliegenden kreisförmigen Felgenflanschen (5);
- einen äußeren Reifen (3) mit zwei Wülsten (6), die an dem kreisförmigen Felgenflansch (5) befestigt sind;
- einen nicht-pneumatischen inneren Reifen (1), **dadurch gekennzeichnet, dass** der innere Reifen expandiertes thermoplastisches Polyurethan (E-TPU) umfasst, wobei der innere Reifen (1) von dem äußeren Reifen (3) und der Radfelge (4) umschlossen ist; und dadurch, dass
- sich der innere Reifen (1) in der Anordnung (2) in einem komprimierten Zustand S1 befindet, welcher Zustand im Vergleich zu einem entspannten Zustand S2 komprimiert ist, wenn der innere Reifen (1) nicht von dem äußeren Reifen (3) umschlossen ist, wobei die Kompression derart ist, dass die Querschnittsoberfläche SA des inneren Reifens (1), welche senkrecht zu der Ebene des Reifens ist, in dem Zustand S1 kleiner ist als in dem Zustand S2;
- der innere Reifen (1), wenn er sich in dem entspannten Zustand S2 befindet, eine Dichte in dem Bereich von 200-400 kg m⁻³ hat;
- die SA im Zustand S1 0,95 mal oder weniger als die SA im Zustand S2 ist.

2. Fahrzeugradanordnung (2) nach Anspruch 1, wobei die SA im Zustand S1 0,90 mal oder weniger ist.

3. Fahrzeugradanordnung (2) nach Anspruch 1 oder 2, wobei der Durchmesser DM_{S2} des inneren Reifens (1) im Zustand S2 im Bereich von 30 bis 40 mm liegt oder wobei die Oberfläche SA_{S2} des inneren Reifens (1) im Zustand S2 im Bereich von 700-1.250 mm² liegt.

4. Fahrzeugradanordnung (2) nach einem der Ansprüche 1 bis 3, wobei der Abstand zwischen den Felgenflanschen (5) im Bereich von 16 bis 26 mm liegt.

5. Fahrzeugradanordnung (2) nach einem der Ansprüche 1 bis 4, wobei der innere Reifen (1) und der äußere Reifen (3) miteinander verbunden sind.

6. Fahrzeugradanordnung (2) nach einem der Ansprüche 1 bis 5, wobei an mindestens einem Teil der Seitenflächen (3a) des äußeren Reifens (3) in der Anordnung (2) die Dicke 0,75 mm oder weniger, insbesondere 0,50 mm oder weniger, beträgt.

7. Fahrzeug, umfassend eine Fahrzeugradanordnung (2) nach einem der vorhergehenden Ansprüche, wobei das Fahrzeug ausgewählt ist aus der Gruppe bestehend aus Fahrrädern, Rollstühlen, Elektrofahrrädern, Mobilitätsrollern, Rollern, Motorrädern, Autos, Lastwagen, Schubkarren, Transportkarren und Handwagen.

8. Verfahren zur Herstellung einer Fahrzeugradanordnung (2) nach einem der Ansprüche 1 bis 7, umfassend
- Bereitstellen 1) einer Radfelge (4) mit zwei gegenüberliegenden kreisförmigen Felgenflanschen (5); 2) eines äußeren Reifens (3) mit Wülsten (6), die an den kreisförmigen Felgenflanschen (5) der Radfelge befestigt werden können; 3) eines nicht-pneumatischen inneren Reifens (1), der expandiertes thermoplastisches Polyurethan (E-TPU) umfasst; dann
- Ziehen eines der Wülste (6) des äußeren Reifens (3) über einen der Felgenflansche (5) der Radfelge (4);
- Drücken des inneren Reifens (1) in den äußeren Reifen (3);
- schließlich Ziehen des zweiten Wulstes (6) des äußeren Reifens (3) über den Felgenflansch (5), um die Fahrzeugradanordnung (2) der Erfindung zu bilden.

9. Verfahren nach Anspruch 8, bei dem der innere Reifen (1), bevor er in den äußeren Reifen (3) gepresst wird, in einer Kompressionsform vorkomprimiert wird.

10. Verfahren nach Anspruch 8, wobei der innere Reifen (1), bevor er in den äußeren Reifen (3) gepresst wird, weicher gemacht wird,
- indem er einem Druck von weniger als 1 bar ausgesetzt wird und anschließend
- einem atmosphärischen Druck ausgesetzt wird.

## Revendications

1. Ensemble roue de véhicule (2), comprenant :
- une jante (4) de roue ayant deux rebords de jante circulaires opposés (5) ;
- un pneu extérieur (3) ayant deux bourrelets (6), fixés au niveau des rebords de jante circulaires (5) ;
- un pneu intérieur non pneumatique (1), **caractérisé en ce que** ledit pneu intérieur comprend du polyuréthane thermoplastique expansé (E-TPU), ledit pneu intérieur (1) étant entouré par le pneu extérieur (3) et par la jante (4) de roue ; et **en ce que**
- le pneu intérieur (1) de l'ensemble (2) est à un état comprimé S1, lequel état est comprimé par rapport à un état relâché S2 lorsque le pneu intérieur (1) n'est pas entouré par le pneu extérieur (3), la compression étant telle que la superficie en section transversale superficie SA du pneu intérieur (1), laquelle superficie étant perpendiculaire au plan du pneu, est plus petite à l'état S1 que à l'état S2 ;
- le pneu intérieur (1), lorsqu'il est à l'état relâché S2, a une densité dans la plage de 200 à 400 kg.m⁻³ ;
- la superficie SA à l'état S1 est égale ou inférieure à 0,95 fois la superficie SA à l'état S2.

2. Ensemble roue de véhicule (2) selon la revendication 1, dans lequel la superficie SA à l'état S1 est inférieure ou égale à 0,90 fois.

3. Ensemble roue de véhicule (2) selon la revendication 1 ou 2, dans lequel le diamètre DM_{S2} du pneu intérieur (1) à l'état S2 est dans la plage de 30 à 40 mm ou dans lequel la surface SA_{S2} du pneu intérieur (1) à l'état S2 est dans la plage de 700 à 1 250 mm².

4. Ensemble roue de véhicule (2) selon l'une quelconque des revendications 1 à 3, dans lequel la distance entre les rebords de jante (5) est dans la plage de 16 à 26 mm.

5. Ensemble roue de véhicule (2) selon l'une quelconque des revendications 1 à 4, dans lequel le pneu intérieur (1) et le pneu extérieur (3) sont reliés l'un à l'autre.

6. Ensemble roue de véhicule (2) selon l'une quelconque des revendications 1 à 5, dans lequel au moins au niveau d'une partie des faces latérales (3a) du pneu extérieur (3) dans l'ensemble (2), l'épaisseur est égale ou inférieure à 0,75 mm, en particulier inférieure ou égale à 0,50 mm.

7. Véhicule comprenant un ensemble roue de véhicule (2) selon l'une quelconque des revendications précédentes, le véhicule étant choisi dans le groupe des vélos, des fauteuils roulants, des vélos électriques, des scooters de mobilité, des scooters, des motos, des voitures, des camions, des brouettes, des chariots et des chariots à main.

8. Procédé de préparation d'un ensemble roue de véhicule (2) selon l'une quelconque des revendications 1 à 7, comprenant :
- la fourniture 1) d'une jante de roue (4) ayant deux rebords de jante circulaires opposés (5) ; 2) d'un pneu extérieur (3) dont des bourrelets (6) peuvent être fixés au niveau des rebords de jante circulaires (5) de la jante de roue ; 3) d'un pneu intérieur non pneumatique (1) comprenant du polyuréthane thermoplastique expansé (E-TPU) ; puis
- le tirage de l'un des bourrelets (6) du pneu extérieur (3) sur l'un des rebords de jante (5) de la jante de roue (4) ;
- l'enfoncement du pneu intérieur (1) dans le pneu extérieur (3) ;
- enfin le tirage du second bourrelet (6) du pneu extérieur (3) sur le rebord de jante (5) pour former l'ensemble roue (2) de l'invention.

9. Procédé selon la revendication 8, selon lequel le pneu intérieur (1), avant d'être enfoncé dans le pneu extérieur (3), est pré-comprimé dans un moule de compression.

10. Procédé selon la revendication 8, selon lequel le pneu intérieur (1), avant d'être enfoncé dans le pneu extérieur (3), est assoupli par
- exposition à une pression inférieure à 1 bar ; puis par
- exposition à la pression atmosphérique.
